# EUROPEAN PATENT SPECIFICATION

(11) **EP 3 771 077 B1**
(45) Date of publication and mention of the grant of the patent: **11.01.2023**
(21) Application number: 19425056.9
(22) Date of filing: 23.07.2019
(51) Int. Cl.: H02K 15/00, H02K 3/50, H02G 1/00, B23B 5/16

(54) **PORTABLE DEVICE AND METHOD FOR RESTORING THE CYLINDRICITY OF A GENERATOR CONDUCTOR, IN PARTICULAR A TURBO-GENERATOR CONDUCTOR**
TRAGBARE VORRICHTUNG UND VERFAHREN ZUR WIEDERHERSTELLUNG DER ZYLINDRIZITÄT EINES GENERATORLEITERS, INSBESONDERE EINES TURBOGENERATORLEITERS
DISPOSITIF PORTABLE ET PROCÉDÉ PERMETTANT DE RESTAURER LA CYLINDRICITÉ D'UN CONDUCTEUR DE GÉNÉRATEUR, EN PARTICULIER D'UN CONDUCTEUR TURBO GÉNÉRATEUR

(43) Date of publication of application: 27.01.2021
(73) Proprietor: ANSALDO ENERGIA S.p.A., 16152 Genova (IT)
(72) Inventor: Vercelli, Giorgio, 16152 Genova (IT); Penzo, Luca, 16152 Genova (IT); Vallarino, Domenico, 16152 Genova (IT)
(74) Representative: Martini, Gabriele

(56) References cited:
- EP-A1- 1 879 279
- EP-A1- 2 645 549
- WO-A1-00/05018
- CN-U- 204 975 351
- DE-U1-202004 019 670
- GB-A- 1 130 953
- US-A- 3 908 491
- US-A- 5 007 778

## Description

### Field of the Invention

The present invention relates to the technical field of the generators, i.e. devices configured for converting an incoming mechanical energy into an electrical energy. In particular, the present invention relates to the field of the service for generators, i.e. the periodic inspection activities carried out in order to check the integrity of the components forming the generators or the repairing activities carried out in order to repair some damaged components for restoring the assembly. More in detail, the service activity related to the present invention refers to operations to be performed for restoring a generator connection in case of a damage occurred at a generator connection itself. With the term "generator connection" we mean the coupling between a stator bar end and a conductor configured for carrying current/voltage outside the generator. Even if the present invention has been introduced as a service activity to be performed for restoring a damaged generator connection, the service activity of the present invention may be performed also before that a damage occurs for providing the generator with new connections. In view of the above preliminary considerations related to the technical field of the present invention, the following description will refer to a portable device and to a method for restoring the cylindricity of a generator conductor for improving/restoring a generator connection. In the following, the above mentioned generator will be described as a turbo-generator, i.e. a generator of a turbine assembly, because in this kind of machine the service activity is very important and it has to be often performed. However, the present invention can be applied also in other kind of generators. In other words, the described implementation of the present invention in the field of the turbine assemblies does not limit the scope of protection of the invention itself.

### Description of prior art

As known, an electrical generator (also called alternator) is an assembly configured for converting an incoming energy in a leaving electrical energy. The present invention refers in particular to a turbo generator wherein the incoming energy is a mechanical energy in form a rotating rotor driven by a turbine. In turn, as know, in the case of a gas turbine, the turbine is driven by an expanding hot gas flow generated in a gas turbine assembly comprising a compressor unit, a combustor unit and the turbine itself; in the case of a steam turbine, the turbine is driven by an expanding high temperature and high pressure water steam in the turbine assembly, that is typically composed of a high pressure, a medium pressure and a low pressure section. In view of the above, an electrical generator comprises a rotating part in form of a sleeve made integral with the rotating rotor and a statoric part that is a fixed structure arranged outside around the rotating part. Also the statoric part is shaped as a sleeve and an airgap is present between the inner rotating part rotor and the outer statoric part of the generator. Therefore, the statoric part is shaped as a hollow cylindrical body wherein the inner cylindrical surface is facing the rotating rotor. The rotating part supports a plurality of magnetic elements in order to generate a rotating magnetic field. The inner surface of the statoric part, i.e. the surface facing the rotating part of the generator, is provided with a plurality of axial grooves (the term axial refers to the rotor axis) wherein each groove defines a recessed seat for housing a stator bar as part of relative electric windings. According to the Faraday's Law, the rotating magnetic field develops an electromotive force in the electric windings of the statoric part. The front portion of the statoric part is called generator end winding and comprises a plurality of stator bar ends configured to be coupled with corresponding conductors for carrying out the generated electric current/voltage. In particular, the present invention refers to a generator connection wherein each conductor is realized in form of a cylindrical body made of a conductor material (as copper). In view of this shape of the conductor, currently each stator bar end is provided with a joint (also made of a conductor material) comprising a base coupled to a stator bar end and a head substantially concave-shaped configured to be coupled with the outer surface of the cylindrical conductor. According to this prior art practice the connection between the joint and the cylindrical conductor is performed according to the following steps. Preliminary the cylindrical conductor is forced against the concave head of the joint and then the joint is brazed to the conductor.

This prior art connection involves some drawbacks. In particular, this connection is prone to mechanical failure due to the weak ness of the joint layout.

In order to avoid this problem, the Applicant developed an alternative joint wherein no room for mechanical stresses leading to damages are present. In particular, this alternative joint comprises a base in form of two plates configured to be coupled with the stator bar end and a head in form of a cylindrical seat configured for housing the end of the cylindrical conductor. In this way, at the connection the cylindrical conductor is fully covered by the cylindrical seat.

In order to replace the old joint with a new joint (in case of a damage or only as improving service activity) it is therefore necessary to detaching or releasing the existing connection and performing a new connection by using the alternative joint foregoing described. Due to the cylindrical/prismatic connection between the alternative joint and the conductor, the outer surface of the conductor (at least the portion to be coupled with the joint) has to be worked/machined for being suitable for the connection. In particular, due to the coupling steps foregoing described and performed for coupling the conductor to the concave head of the old joint, on the outer surface of the conductor may be present brazing material to be removed (due to the brazing step) . Moreover, the outer surface of the conductor discloses some portion with local deformations (due to the step of jigging the conductor to form the conductor for reaching out to the joint position round the end winding at the phase breaks). In order to restoring the cylindricity of the conductor it is necessary to remove some material from the outer surface of the conductor by using a lathing device.

The solution according to the prior art practice, that is simple and straightforward for those skilled in the art, for preparing (lathing) the conductor for the new joint is the complete removal of the conductor from the generator in order to move the conductor away from the generator to a working station where the outer conductor surface may be worked by using common lathing tools. Indeed, standard lathing devices have a size too big for being used onboard the generator. This solution is so expensive in terms of costs/time that usually is today preferable to replace the old conductor with a new conductor instead of restoring the old conductor.

US3908491 discloses a multi-purpose tool for flange facing, grooving, or facing cylindrical material or resufacing tubular or cylindrical material.

CN204975351U discloses a portable lathe including workstation, clamping device, guiding mechanism, and knife rest subassembly.

WO0005018 discloses a tool feed module for a portable lathe machine tool including a tool block carrying a cutting tool.

DE202004019670 discloses a portable milling machine for reshaping electric welding tips having a motor unit with a flexible drive shaft to a milling cutter tool.

GB1130953 discloses a portable machine tool for turning or alternatively lapping a shaft in situ and which is adapted to be assembled on a shaft not having free ends.

### Disclosure of the invention

Accordingly, a primary object of the present invention is to provide a portable device configured for being used onsite ("in-situ") and for preparing an existing cylindrical conductor of a generator (in particular a turbo-generator) for being coupled to a joint having a cylindrical seat. With the term "portable" we mean a device that can be used between the generator components without requiring the conductor removal, i.e. a device having a size as small as possible. In particular, the present invention refers to a portable lathing device configured for lathing the outer surface of the cylindrical conductor in order to restore the surface cylindricity because of pre-existing local deformation and to prepare the conductor to be housed (and brazed) in a cylindrical joint seat.

Beside the above main scope of the invention, there are also some addition peculiar problems solved by the invention; namely:
- a very narrow working space;
- the part to be restored (lathed) is attached to the generator and could not be detached and mounted easily, unless costly and time consuming disassembly is envisaged;
- the restoring process requires some sort of power (pneumatic/electrical/hydraulic) which could not be just delivered by hand.

Before entering into the mechanical details of the portable lathing device, the present invention may also be defined as an alternative method for restoring the cylindricity of the generator conductor. Indeed, actually the prior art practice does not suggest to perform this machining step onsite and inside the generator in order to prepare the conductor to be housed and brazed in joint cylindrical seat.

Therefore, the present invention also provides a method for restoring the cylindricity of a conductor of a generator, in particular a turbo-generator, wherein the conductor is a cylindrical conductor coupled to a first stator bar joint of the a generator. This method comprises the steps of:
a) providing a portable lathing device (as will be described in the following);
b) releasing the coupling between the first stator bar joint and the conductor; usually the first stator bar joint comprises a conductor receiving seat concave shaped, whilst the existing coupling is realized by brazing the connection while the conductor is somewhat forced against the seat;
c) coupling the portable lathing device to the conductor, wherein the portable lathing device has a very small size so the conductor can be still coupled to the generator;
d) lathing the conductor (i.e. part of the end of the conductor) by activating the portable lathing device.

Preferably, the step b) is performed by induction heating.

Since the scope of the method is putting the conductor in a condition (smoot and cylindrical end outer surface) to be suitable for being housed and brazed in a new joint cylindrical seat, the method comprises also the steps of:
e) replacing the first or existing stator bar joint with a second or new stator bar joint having a cylindrical seat configured (i.e. having a suitable inner diameter) for housing the lathed part of the conductor;
f) coupling the lathed conductor to the cylindrical seat of the second stator bar joint.

Since according the invention the end of the conductor is lathed while the conductor is still connected to the generator (i.e. the downstream part of the generator), the conductor is fixed whereas the portable lathing device is provided with a rotating and advancing lathing tool. Therefore, during the step d) the conductor is fixed and the lathing tool is rotating around and advancing along the conductor.

Thus, the invention involves a reliable and efficient method performed by using a handy (portable and able to be used onboard the stator) rotating system for lathing the generator's cylindrical connectors. Please be noted that in a traditional lathing process the piece to be lathed is rotating and the tool is fixed. On the contrary, in the present invention the piece to be machined is fixed and the lathing tool is rotating around and advancing along the cylindrical conductor.

As foregoing cited, the Applicant developed a new portable device suitable for performing the method of the invention, i.e. a device configured for lathing the conductor when the conductor is fixed to the generator and configured for being used onboard the stator. Therefore, the portable device according to the main definition of the invention comprises:
- a support configured for coupling the device to an end of the conductor;
- a lathing tool (supported by the support) configured for rotating around (and lathing) the end of the conductor while the conductor is fixed and bears the support.

Preferably, the device comprises a motor for driving at least the rotation of the lathing tool. For instance an adjustable pneumatic motor.

The lathing tool is configured also for advancing along the conductor. This advancing movement may be motorized or performed by (for instance) an advancing screw.

The device comprises a first gearbox supporting the motor and a second gearbox supporting the lathing tool wherein the first gearbox is movable with respect to the second gearbox. For instance, the boxes may be coupled by two flanges for allowing an angular regulation of the first box with respect to the second gearbox fixed to the conductor.

Preferably, the connection between the first gearbox and the second gearbox may be a flexible connection configured for moving the first gearbox away from the second gearbox.

Preferably, the device comprises a bowl supporting the lathing tool and configured for receiving the conductor end to be lathed. Preferably, this bowl comprising at least a window for discharging the burrs of the material removed from the conductor.

Preferably, the lathing tool is adjustable (for instance by steps) along the radial direction with respect to the conductor in order to progressively remove material from the conductor.

Preferably, the lathing tool is removable for allowing the arrangement of a new or different lathing tool.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a gas turbine assembly for power plants;
- figure 2 is a schematic view of a statoric part of a generator;
- figure 3 is a schematic enlarged view of the portion labeled as III in figure 2 showing an existing generator connection;
- figure 4 is a schematic view of an alternative generator connection wherein before the coupling the existing conductor has to be lathed;
- figure 5 is a schematic view of an embodiment of a portable lathing device according to present invention suitable for lathing the conductor fixed to the generator;
- figure 6 is a schematic view of the portable lathing device of figure 5 coupled with a generator conductor.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

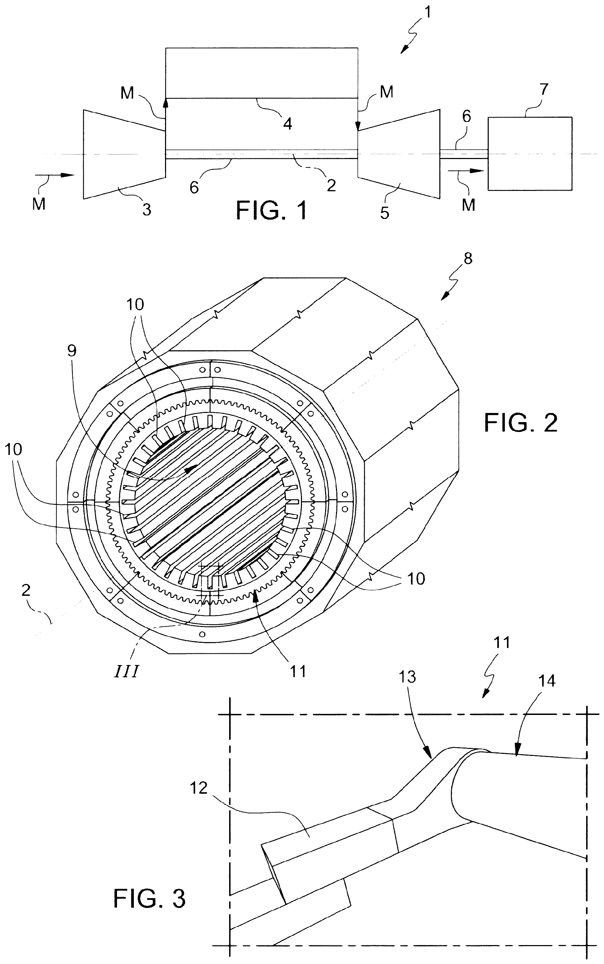

Reference is made to figure 1 which is a schematic view of a gas turbine assembly for power plants (in the following only gas turbine). Indeed, a gas turbine generator field is a non-limiting example of a possible application of the present invention. Figure 1 discloses a gas turbine 1 having a rotor 6 defining an axis 2 and comprising in series along the main flow M:
- a compressor unit 3,
- a combustor unit 4 wherein the compressed air is mixed with at least a fuel and this mixture is combusted to create a hot gas flow,
- a turbine unit 5 where the hot gas flow expands performing rotating work on the rotor 6.

According to figure 1, downstream the turbine 5 the rotor 6 works for driving the rotating part in a generator 7.

Reference is now made to figures 2 that is a schematic view of the statoric part 8 of the foregoing cited generator 7. In particular, figure 2 discloses a statoric part 8 in form of a hollow cylindrical structure along the axis 2 suitable for housing the rotating part (not shown in figure 2). As above described, the rotor may be the gas turbine rotor 6 of figure 1 and therefore the generator axis may be aligned or not with respect to gas turbine axis. Statoric part 8 of the generator 7 comprises an inner surface 9 facing the rotating part and wherein an airgap is provided between the rotating part and this inner surface 9. As disclosed in figure 2, the inner surface 9 is provided with a plurality of axial grooves or slots 10 parallel to the axis 2 and circumferentially spaced one from the other. Each groove 10 houses a stator bar defining electrical windings. As known (and according to the Faraday's Law), the rotating magnetic field generated by the rotating part develops an electromotive force (i.e. an electric energy) in the electric windings of the statoric part. In order to use this electric energy the front portion of the statoric part (also called generator end winding and labelled with the reference 11 in figure 2) comprises a plurality of stator bar ends coupled through joints with corresponding conductors in turn fixed to downstream parts of the generator.

Reference is now made to figure 3 that is a schematic enlarged view of the portion of generator end winding labelled with the reference III in figure 2. In particular, figure 3 discloses the existing connection present in the generator before the actuation of the present invention. According to the example of figure 3 the stator bar end 12 is coupled to a first joint 13 (also made of a conductor material) comprising a base coupled to a stator bar end 12 and a head substantially concave-shaped configured to be coupled with the outer surface of the cylindrical conductor 14. As described in the prior art chapter, the connection between this joint 13 and the cylindrical conductor 14 is performed according to the following steps. Preliminarly the cylindrical conductor 14 is somewhat forced against the concave head of the joint 13 and then the joint 13 is brazed to the conductor 14. This prior art connection involves some drawbacks. In particular, this connection is prone to mechanical failure due to the weakness of the joint layout. In order to avoid this problem, the Applicant developed an alternative joint wherein no room for mechanical stresses leading to damages are present.

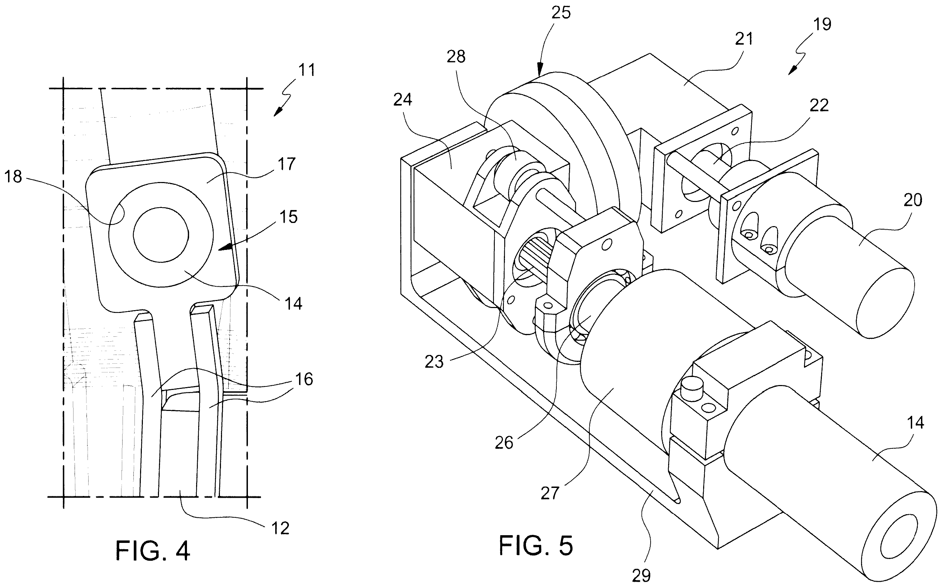

Reference is now made to figure 4 disclosing an alternative joint for connecting the stator bar end to the conductor. In particular, this alternative joint 15 comprises a base in form of two plates 16 configured to be coupled with the stator bar end 12 and a head 17 comprising a cylindrical seat 18 configured for housing the end of the cylindrical conductor 14. As disclosed in figure 4, in this way at the connection the cylindrical conductor 14 is fully embraced by the cylindrical seat 18 so as it achieves a pocket joint. In order to replace the old joint 13 (figure 3) with the new joint 15 of figure 4 (in case of a damage of the existing joint 13 or only as improving service activity) it is therefore necessary to detaching or releasing the existing connection and performing a new connection by using this alternative joint 15 foregoing described. Due to the cylindrical/prismatic connection between the alternative joint 15 and the conductor 14, the outer surface of the conductor 14 (at least the portion to be coupled with the joint 15) has to be worked/machined for being suitable for the connection. Due to the coupling steps foregoing described and performed for coupling the conductor 14 to the existing concave-head of the old joint 13, the outer surface of the conductor 14 discloses some local deformations (due to the step of jigging to form the conductor for reaching out to the joint position round the end winding at the phase breaks against the concave head of the old joint). In order to restoring the cylindricity of the conductor and to remove some material from the outer surface of the conductor 14, Applicant developed a new portable lathing device configured for being used onboard the generator end winding after the conductor has been released by the old joint 13 but still fixed to the downstream parts of the generator.

Reference is now made to figure 5 that is an embodiment of a portable lathing device of the present invention (also a conductor 14 has been represented in figure 5). This portable lathing device 19 comprises a pneumatic motor 20 attached to a first gearbox 21 through a male-female shaft coupling 22. The gear box 21 houses a device for transmitting the rotating movement to a splined shaft 23 supported by a second gear box 24. The gear boxes 21 and 24 are connected by flanges 25 so that the first box 21 can rotate with respect to the secondo box 24. The splined shaft 23 is connected to an output shaft 26 supported by a bushing. The bushing carries a utensil bowl 27 supporting a lathing tool (not represented) working on the outer surface of the conductor 14. An advancing screw 28 causes the bowl 27 to advance from the position 0 when the bowl 27 is at distance 0 from the gearbox 24 and position 1 when the bowl 27 has advanced (for instance for 40 millimeters). The disclosed device 19 moreover comprises a support frame 29 that is at one end coupled to the second box 24 and at the opposite end supports the conductor 14 in order to align the conductor axis with the bowl axis. In another embodiment of the invention (not represented), in order to match the geometry in the end winding and accommodate for space constraints, the layout of the transmission, composed of the pneumatic motor 20 and gear box 21/gear boxes 21 and 24, the pneumatic motor can be attached to a first gear box 21 or directly to a second gear box 24 by means of a flexible shaft for torque transmission.

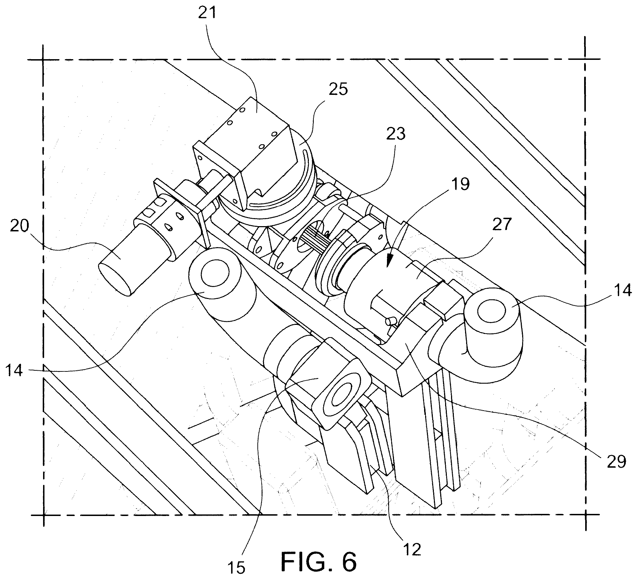

Finally, figure 6 discloses how the device 19 of figure 5 can be used for performing the method of the invention. As disclosed in figure 6 the device 19 has a size suitable for being used onboard the stator without requiring the conductor removal. In this figure the first box has been rotated due to presence of a conductor 14 (already coupled to the new joint 15).

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A method for restoring the cylindricity of a generator conductor (14), in particular a turbo-generator conductor, wherein the conductor (14) is a cylindrical conductor coupled to a first stator bar joint (13) of the generator (7); the method comprising the steps of:
a) releasing the coupling between the first stator bar joint (13) and the conductor (14);
**characterized in that** the method comprises the steps of:
b) providing a portable device (19) provided with a lathing tool;
c) coupling the portable lathing device (19) to the conductor (14), the conductor being still coupled to the generator (7) ;
d) lathing the conductor (14).

2. Method as claimed in claim 1, wherein the existing coupling between the conductor (14) and the first stator bar joint (13) is realized by brazing; the step b) is performed by induction heating.

3. Method as claimed in claim 1 or 2, wherein the method comprises also the steps of:
e) replacing the first stator bar joint (13) with a second stator bar joint (15) having a cylindrical seat (18) configured to be coupled with the lathed part of the conductor (14);
f) coupling the lathed conductor (14) to the cylindrical seat (18) of the second stator bar joint (15).

4. Method as claimed in claim 1, wherein the coupling between the lathed conductor and the second stator bar joint is realized by brazing.

5. Method as claimed in any one of the foregoing claims, wherein the portable lathing device (19) is provided with a rotating lathing tool; during the step d) the conductor (14) is fixed and the lathing tool is rotating around the conductor (14).

6. Method as claimed in any one of the foregoing claims, wherein the portable lathing device (19) is provided with an advancing lathing tool; during the step d) the conductor (14) is fixed and the lathing tool is advancing along the conductor (14).

7. A portable device (19) for restoring the cylindricity of a generator conductor (14), in particular a turbo-generator conductor, the device (19) having a size suitable for being used onboard the generator (7) and comprising:
- a support (29) configured for coupling the device (19) to an end of the conductor (14);
- a lathing tool configured for rotating around the end of the conductor (14) while the conductor is fixed;
**characterised in that** the lathing tool is configured for advancing along the end of the conductor (14);
wherein the device comprises a first gearbox (21) supporting the motor (20) and a second gearbox (24) supporting the lathing tool; the first gearbox (21) being movable with respect to the second gearbox (24).

8. Device as claimed in claim 7, wherein the device comprises an adjustable pneumatic motor (20) for driving the lathing tool.

9. Device as claimed in claim 7, wherein the device comprises flexible connection between the first gearbox (21) and the second gearbox (24) configured for moving the first gearbox (21) away from the second gearbox (24).

10. Device as claimed in any one of the foregoing claims from 7 to 9, wherein the device comprises a bowl (27) supporting the lathing tool and housing the conductor end; the bowl (27) comprising at least a window for discharging the material removed from the conductor.

11. Device as claimed in any one of the foregoing claims from 7 to 10, wherein the lathing tool is movable along a radial direction with respect to the conductor (14).

12. Device as claimed in claim 11, wherein the lathing tool is movable step by step along a radial direction with respect to the conductor (14).

13. Device as claimed in any one of the foregoing claims from 7 to 12, wherein the lathing tool is removable.

## Patentansprüche

1. Verfahren zur Wiederherstellung der Zylindrizität eines Generatorleiters (14), insbesondere eines Turbogeneratorleiters, wobei der Leiter (14) ein zylindrischer Leiter ist, der mit einem ersten Statorstabanschluss (13) des Generators (7) gekoppelt ist, wobei das Verfahren die Schritte umfasst:
a) Lösen der Kopplung zwischen dem ersten Statorstabanschluss (13) und dem Leiter (14);
**dadurch gekennzeichnet, dass** das Verfahren die Schritte umfasst:
b) Bereitstellen einer mit einem Drehwerkzeug versehenen tragbaren Vorrichtung (19);
c) Koppeln der tragbaren Drehvorrichtung (19) mit dem Leiter (14), wobei der Leiter weiterhin mit dem Generator (7) gekoppelt ist;
d) Drehbearbeiten des Leiters (14).

2. Verfahren nach Anspruch 1, wobei die existierende Kopplung zwischen dem Leiter (14) und dem ersten Statorstabanschluss (13) durch Hartlöten verwirklicht ist, wobei der Schritt b) durch Induktionserwärmung ausgeführt wird.

3. Verfahren nach Anspruch 1 oder 2, wobei das Verfahren ferner die Schritte umfasst:
e) Ersetzen des ersten Statorstabanschlusses (13) durch einen zweiten Statorstabanschluss (15), der einen zylindrischen Sitz (18) hat, der dafür konfiguriert ist, mit dem drehbearbeiteten Teil des Leiters (14) gekoppelt zu werden;
f) Koppeln des drehbearbeiteten Leiters (14) mit dem zylindrischen Sitz (18) des zweiten Statorstabanschluss (15).

4. Verfahren nach Anspruch 1, wobei die Kopplung zwischen dem drehbearbeiteten Leiter und dem zweiten Statorstabanschluss durch Hartlöten verwirklicht wird.

5. Verfahren nach einem der vorhergehenden Ansprüche, wobei die tragbare Drehvorrichtung (19) mit einem rotierenden Drehwerkzeug versehen ist, wobei während Schritt d) der Leiter (14) fixiert wird und das Drehwerkzeug um den Leiter (14) rotiert.

6. Verfahren nach einem der vorhergehenden Ansprüche, wobei die tragbare Drehvorrichtung (19) mit einem vorrückenden Drehwerkzeug versehen ist, wobei während Schritt d) der Leiter (14) fixiert ist und das Drehwerkzeug entlang dem Leiter (14) vorrückt.

7. Tragbare Vorrichtung (19) zum Wiederherstellen der Zylindrizität eines Generatorleiters (14), insbesondere eines Turbogeneratorleiters, wobei die Vorrichtung (19) eine Größe hat, die zur Verwendung an dem Generator (7) geeignet ist, und umfasst:
- eine Halterung (29), die dafür konfiguriert ist, die Vorrichtung (19) mit einem Ende des Leiters (14) zu koppeln;
- ein Drehwerkzeug, das dafür konfiguriert ist, um das Ende des Leiters (14) zu rotieren, während der Leiter festgelegt ist;
**dadurch gekennzeichnet, dass** das Drehwerkzeug dafür konfiguriert ist, entlang dem Ende des Leiters (14) vorzurücken;
wobei die Vorrichtung ein erstes Getriebe (21) zum Halten des Motors (20) und ein zweites Getriebe umfasst, das das Drehwerkzeug trägt, wobei das erste Getriebe (21) relativ zu dem zweiten Getriebe (24) beweglich ist.

8. Vorrichtung nach Anspruch 7, wobei die Vorrichtung einen einstellbaren Pneumatikmotor (20) zum Antreiben des Drehwerkzeugs umfasst.

9. Vorrichtung nach Anspruch 7, wobei die Vorrichtung eine flexible Verbindung zwischen dem ersten Getriebe (21) und dem zweiten Getriebe (24) umfasst, die dafür konfiguriert ist, das erste Getriebe (21) von den zweiten Getriebe (24) weg zu bewegen.

10. Vorrichtung nach einem der vorhergehenden Ansprüche von 7 bis 9, bei die Vorrichtung eine Schale (27) umfasst, die das Drehwerkzeug trägt und das Leiterende aufnimmt, wobei die Schale (27) mindestens ein Fenster zum Abführen des von dem Leiter abgetragenen Materials umfasst.

11. Vorrichtung nach einem der vorhergehenden Ansprüche von 7 bis 10, wobei das Drehwerkzeug entlang einer radialen Richtung in Bezug auf den Leiter (14) beweglich ist.

12. Vorrichtung nach Anspruch 11, wobei das Drehwerkzeug schrittweise entlang einer radialen Richtung in Bezug auf den Leiter (14) beweglich ist.

13. Vorrichtung nach einem der vorhergehenden Ansprüche von 7 bis 12, wobei das Drehwerkzeug abnehmbar ist.

## Revendications

1. Procédé destiné à restaurer la cylindricité d'un conducteur de générateur (14), en particulier d'un conducteur de turbogénérateur, dans lequel le conducteur (14) est un conducteur cylindrique couplé à un premier joint de barre de stator (13) du générateur (7) ; le procédé comprenant l'étape suivante :
a) libérer le couplage entre le premier joint de barre de stator (13) et le conducteur (14) ;
**caractérisé en ce que** le procédé comprend les étapes suivantes :
b) fournir un dispositif portatif (19) fourni avec un outil de tournage ;
c) coupler le dispositif de tournage portatif (19) au conducteur (14), le conducteur étant toujours couplé au générateur (7) ;
d) tourner le conducteur (14).

2. Procédé selon la revendication 1, dans lequel le couplage existant entre le conducteur (14) et le premier joint de barre de stator (13) est réalisé par brasage ; l'étape b) est exécutée par chauffage par induction.

3. Procédé selon la revendication 1 ou 2, dans lequel le procédé comprend également les étapes suivantes :
e) remplacer le premier joint de barre de stator (13) par un second joint de barre de stator (15) ayant un siège cylindrique (18) configuré pour être couplé à la partie tournée du conducteur (14) ;
f) coupler le conducteur tourné (14) au siège cylindrique (18) du second joint de barre de stator (15).

4. Procédé selon la revendication 1, dans lequel le couplage entre le conducteur tourné et le second joint de barre de stator est réalisé par brasage.

5. Procédé selon l'une quelconque des revendications précédentes, dans lequel le dispositif de tournage portatif (19) est doté d'un d'outil de tournage rotatif ; au cours de l'étape d), le conducteur (14) est fixé et l'outil de tournage tourne autour du conducteur (14).

6. Procédé selon l'une quelconque des revendications précédentes, dans lequel le dispositif de tournage portatif (19) est doté d'un d'outil de tournage qui avance ; au cours de l'étape d), le conducteur (14) est fixé et l'outil de tournage avance le long du conducteur (14).

7. Dispositif mobile (19) destiné à restaurer la cylindricité d'un conducteur de générateur (14), en particulier d'un conducteur de turbogénérateur, le dispositif (19) ayant une taille appropriée pour être utilisé à bord du générateur (7) et comprenant :
- un support (29) configuré pour coupler le dispositif (19) à une extrémité du conducteur (14) ;
- un outil de tournage configuré pour tourner autour de l'extrémité du conducteur (14) tandis que le conducteur est fixe ;
**caractérisé en ce que** l'outil de tournage est configuré pour avancer le long de l'extrémité du conducteur (14) ;
dans lequel le dispositif comprend une première boîte de vitesses (21) qui supporte le moteur (20) et une seconde boîte de vitesses (24) qui supporte l'outil de tournage ; la première boîte d'engrenages (21) étant mobile par rapport à la seconde boîte d'engrenages (24).

8. Dispositif selon la revendication 7, dans lequel le dispositif comprend un moteur pneumatique réglable (20) pour entraîner l'outil de tournage.

9. Dispositif selon la revendication 7, dans lequel le dispositif comprend une connexion flexible entre la première boîte de vitesses (21) et la seconde boîte de vitesses (24) configurée pour déplacer la première boîte de vitesses (21) en s'éloignant de la seconde boîte de vitesses (24).

10. Dispositif selon l'une quelconque des revendications précédentes 7 à 9, dans lequel le dispositif comprend une cuvette (27) supportant l'outil de tournage et abritant l'extrémité de conducteur ; la cuvette (27) comprenant au moins une fenêtre destinée à évacuer la matière retirée du conducteur.

11. Dispositif selon l'une quelconque des revendications précédentes 7 à 10, dans lequel l'outil de tournage est mobile le long d'une direction radiale par rapport au conducteur (14).

12. Dispositif selon la revendication 11, dans lequel l'outil de tournage est mobile pas à pas le long d'une direction radiale par rapport au conducteur (14).

13. Dispositif selon l'une quelconque des revendications précédentes 7 à 12, dans lequel l'outil tournage est amovible.
